# DEMANDE DE BREVET EUROPEEN

(11) **EP 4 187 697 A2**
(43) Date de publication de la demande: **31.05.2023**
(21) Numéro de dépôt: 22209390.8
(22) Date de dépôt: 24.11.2022
(51) Int. Cl.: H01M 50/204, H01M 50/249, H01M 50/325, H01M 50/342, H01M 50/35, H01M 50/358, H01M 50/375

(54) **ENSEMBLE POUR UN VÉHICULE COMPORTANT UNE PLURALITÉ DE BATTERIES ET UN SYSTÈME D'ÉVACUATION**

(30) Priorité: 25.11.2021 FR 2112507
(71) Demandeur: Airbus Operations (S.A.S.), 31060 Toulouse Cedex 9 (FR); Airbus Operations S.L., 28906 Getafe Madrid (ES)
(72) Inventeur: DE BROUWER, Gabrielle Joséphine, 28906 GETAFE MADRID (ES); ARMERO, Bernardo, 31060 TOULOUSE (FR)
(74) Mandataire: Cabinet Le Guen Maillet

(57) **Abrégé**

L'invention concerne un ensemble (150) pour un véhicule comportant au moins deux blocs batterie (152a-c), pour chacun, un boîtier (202) dans lequel ledit bloc batterie (152a-c) est enfermé et qui présente une face de connexion (203), un orifice de sortie (156) dans une peau extérieure (158) d'un véhicule, une canalisation principale (161) connectée à l'orifice de sortie (156), pour chaque boîtier (202), une canalisation d'évacuation (162a-c) connectée entre la face de connexion (203) et la canalisation principale (161), et au niveau du raccordement entre chaque face de connexion (203) et la canalisation d'évacuation (162a-c), un boîtier d'amortissement (170a-c) et au niveau du raccordement entre la canalisation principale (161) et l'orifice de sortie (156), un boîtier d'amortissement (170d), où chaque boîtier d'amortissement (170a-d) limite l'amplitude d'une surpression qui se propage dudit boîtier (202) vers l'orifice de sortie (156).

Un tel ensemble permet entre autres un amortissement d'une surpression se propageant lorsqu'une batterie se dégrade.

## Description

### DOMAINE TECHNIQUE

La présente invention concerne un ensemble pour un véhicule, en particulier un aéronef, où ledit ensemble comporte une pluralité de batteries et un système d'évacuation arrangé pour évacuer les fluides hors du véhicule. L'invention concerne également un véhicule équipé d'un tel ensemble.

### ÉTAT DE LA TECHNIQUE ANTÉRIEURE

Un aéronef comporte classiquement des batteries, en particulier des batteries Lithium-ion, afin d'assurer l'alimentation en électricité des appareils présents dans l'aéronef.

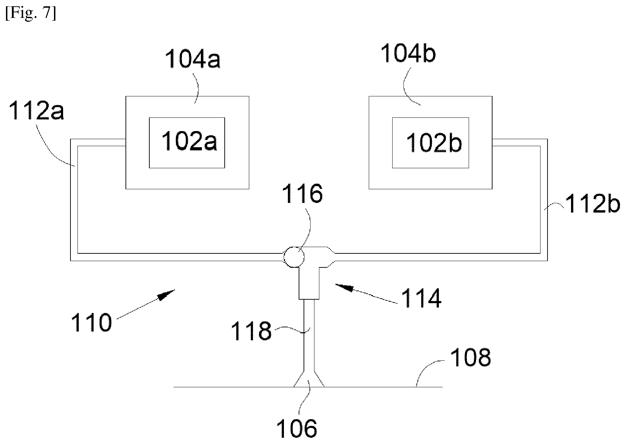

La Fig. 7 montre un mode d'installation de l'état de la technique. L'installation comporte deux blocs batterie 102a-b, chacun étant constitué d'au moins une batterie, et chaque bloc batterie 102a-b est enfermé dans une enceinte 104a-b délimitée par une paroi et assurant le confinement du bloc batterie 102a-b en cas de défaut sur l'une des batteries dudit bloc batterie 102a-b.

Lorsqu'une batterie se détériore, des gaz peuvent se répandre dans l'enceinte 104a-b. Pour évacuer ces gaz, l'aéronef comporte un système d'évacuation 110 qui assure l'évacuation des gaz vers l'extérieur de l'aéronef.

Le système d'évacuation 110 est prévu pour deux blocs batterie 102a-b et comporte un orifice de sortie 106 qui est arrangé dans la peau 108 de l'aéronef, un raccord en T 114 et, pour chaque bloc batterie 102a-b, une canalisation d'évacuation 112a-b fluidiquement connectée entre l'enceinte 104a-b associée et une des deux entrées du raccord en T 114.

Le système d'évacuation 110 comporte également une canalisation de sortie 118 fluidiquement connectée entre une sortie du raccord en T 114 et l'orifice de sortie 106.

Le raccord en T 114 est équipé d'un clapet anti-retour 116, ici sous la forme d'une bille qui, en fonction de la pression dans chaque canalisation d'évacuation 112a-b se déplace entre les deux entrées du raccord en T 114 afin de les obturer alternativement et ainsi permettre le passage du gaz d'une canalisation d'évacuation 112a-b vers l'orifice de sortie 106.

Ainsi lorsqu'un problème intervient au niveau du bloc batterie 102a, le gaz sous pression s'écoule dans la canalisation d'évacuation 112a et pousse la bille contre l'autre canalisation d'évacuation 112b pour l'obturer et empêcher l'écoulement du fluide vers le bloc batterie 102b. Le gaz poursuit alors son avancée à travers la canalisation de sortie 118 puis l'orifice de sortie 106.

Lorsqu'une batterie se détériore, elle peut générer une surpression qui se propage alors à travers les canalisations 112a-b et 118 et le raccord en T 114. Afin de supporter cette surpression, les canalisations 112a-b et 118 doivent être relativement résistantes. Pour ce faire, elles sont réalisées en métal et le système d'évacuation 110 est alors relativement lourd, ce qui est préjudiciable du point de vue de la consommation pour l'aéronef.

En outre, dans le cas de l'utilisation d'une bille, il est nécessaire de prévoir des moyens qui évitent le blocage de la bille par le gel, ce qui alourdit d'autant le système d'évacuation 110.

### EXPOSÉ DE L'INVENTION

Un objet de la présente invention est de proposer un ensemble pour un véhicule, en particulier un aéronef, où ledit ensemble comporte une pluralité de batteries et un système d'évacuation arrangé pour évacuer les fluides hors du véhicule, et où ce système d'évacuation est plus léger que dans le cas de l'état de la technique.

À cet effet, est proposé un ensemble pour un véhicule, ledit ensemble comportant :
- au moins deux blocs batterie, chacun étant constitué d'au moins une batterie,
- pour chaque bloc batterie, un boîtier dans lequel ledit bloc batterie est enfermé et qui présente une face de connexion,
- un orifice de sortie arrangé à travers une peau extérieure du véhicule,
- une canalisation principale fluidiquement connectée à l'orifice de sortie,
- pour chaque boîtier, une canalisation d'évacuation fluidiquement connectée entre la face de connexion dudit boîtier et la canalisation principale, et
- au niveau du raccordement entre chaque face de connexion et la canalisation d'évacuation associée, un boîtier d'amortissement d'un premier type et au niveau du raccordement entre la canalisation principale et l'orifice de sortie, un boîtier d'amortissement d'un deuxième type, où chaque boîtier d'amortissement est configuré pour limiter l'amplitude d'une surpression qui se propage dudit boîtier vers l'orifice de sortie,
   où l'ensemble comporte, associé à chaque boîtier, une enceinte délimitée par une paroi et dans laquelle ledit boîtier et le boîtier d'amortissement du premier type associé audit boîtier sont logés, où chaque canalisation d'évacuation est fluidiquement connectée à la face de connexion associée à travers la paroi de l'enceinte correspondante, où chaque boîtier d'amortissement du premier type comporte une zone fragilisée réalisée dans la face de connexion du boîtier, un châssis fixé de manière étanche entre la canalisation d'évacuation et la face de connexion du boîtier et présentant une fenêtre qui le traverse et est en regard de la zone fragilisée, un volet monté sur le châssis et mobile alternativement entre une position fermée dans laquelle le volet obture la fenêtre et une position ouverte dans laquelle le volet n'obture pas la fenêtre, un actionneur agencé pour déplacer le volet de la position ouverte à la position fermée et inversement, chaque enceinte est équipée d'un capteur de pression et d'un capteur de température prévus pour mesurer la pression et la température qui règnent dans ladite enceinte et où l'ensemble comporte une unité de contrôle arrangée pour recevoir les mesures transmises par les capteurs de pression et les capteurs de température et commander chaque actionneur.

Un tel ensemble permet entre autres un amortissement d'une surpression se propageant lorsqu'une batterie se dégrade.

Avantageusement, chaque enceinte comporte un capteur de température prévu pour mesurer la température qui règne dans ladite enceinte, l'ensemble comporte un réservoir contenant un gaz inerte sous pression, un réseau de canalisations de déversement comportant une extrémité fluidiquement connectée au réservoir à travers une électrovanne de départ, pour chaque enceinte, une extrémité fluidiquement connectée à ladite enceinte à travers une électrovanne d'arrivée, et une extrémité fluidiquement connectée à la canalisation principale à travers une électrovanne d'arrivée, et une unité secondaire de contrôle arrangée pour recevoir les mesures transmises par les capteurs de température et commander chaque électrovanne en fermeture ou en ouverture.

L'invention propose également un aéronef comportant une peau extérieure et au moins un ensemble selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique d'un ensemble selon un premier mode de réalisation de l'invention,
Fig. 3 est une représentation schématique d'un ensemble selon un deuxième mode de réalisation de l'invention,
Fig. 4 est une vue en coupe d'un boîtier d'amortissement selon un premier mode de réalisation de l'invention,
Fig. 5 est une vue en coupe d'un boîtier d'amortissement selon un deuxième mode de réalisation de l'invention,
Fig. 6 est une vue en coupe d'un boîtier d'amortissement selon un troisième mode de réalisation de l'invention, et
Fig. 7 est une représentation schématique d'un ensemble de l'état de la technique.

### EXPOSÉ DÉTAILLÉ DE MODES DE RÉALISATION

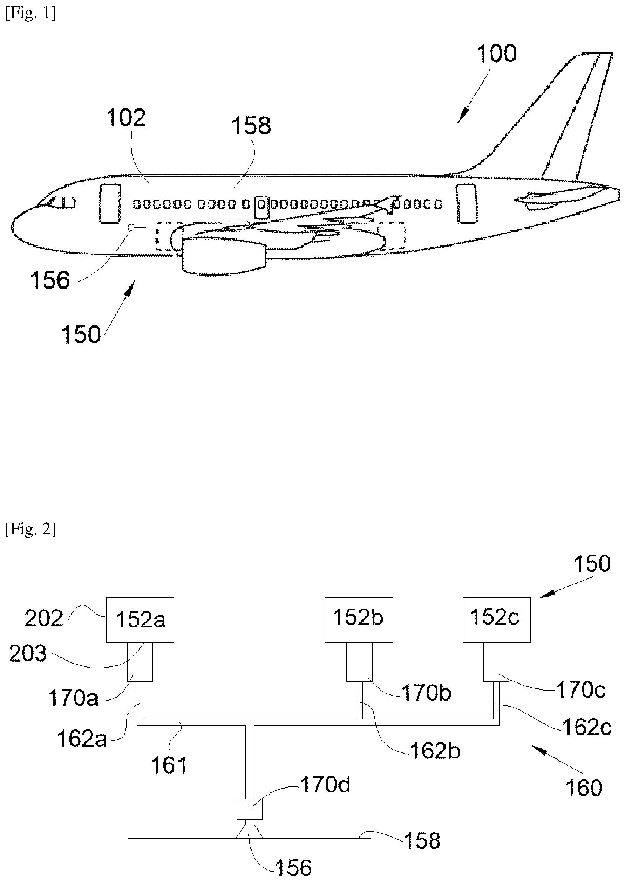

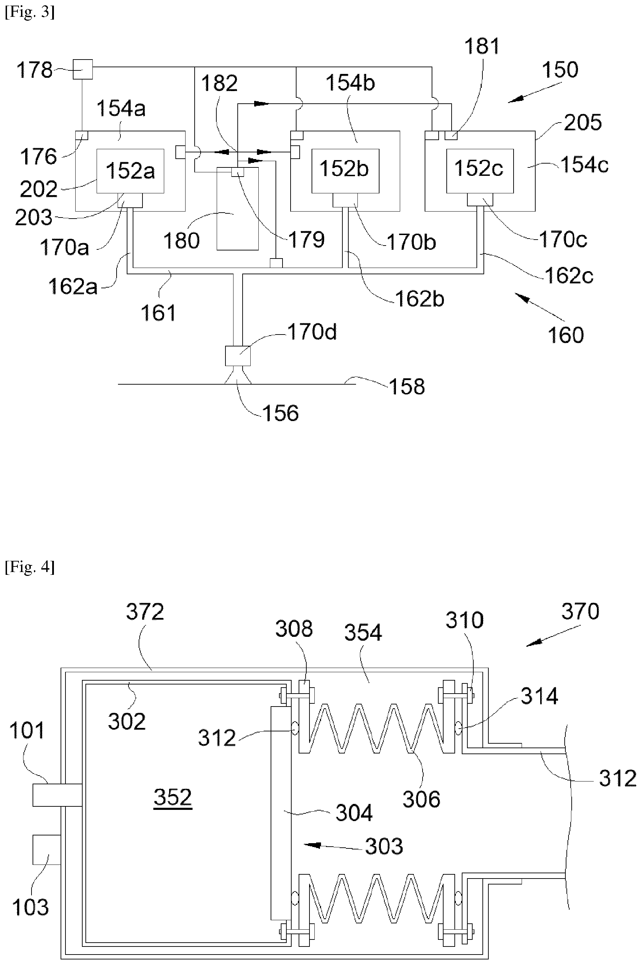

La Fig. 1 montre un aéronef 100 qui comporte un fuselage 102 présentant une peau extérieure 158 et à l'intérieur duquel est fixé un ensemble 150 selon l'invention et qui est représenté schématiquement à la Fig. 2 pour un premier mode de réalisation de l'invention et à la Fig. 3 pour un deuxième mode de réalisation de l'invention. Bien que l'invention soit plus particulièrement décrite dans le cas d'un aéronef, elle s'applique à tous véhicules transportant des blocs batterie en fonctionnement.

Dans le premier mode de réalisation de l'invention, l'ensemble 150 comporte une pluralité de blocs batterie 152a-c et chaque bloc batterie 152a-c est enfermé dans un boîtier 202 assurant le confinement du bloc batterie 152a-c et présentant une face de connexion 203. Dans le mode de réalisation de l'invention présenté sur les Figs. 2 et 3, il y a trois blocs batterie 152a-c mais l'invention peut être mise en œuvre à partir d'au moins deux blocs batterie 152a-c.

Chaque bloc batterie 152a-c comporte au moins une batterie, en particulier une batterie Lithium-ion. Ces batteries sont destinées à alimenter des appareils électriques de l'aéronef 100 à travers des conducteurs électriques non représentés qui courent entre les batteries et les appareils électriques.

L'ensemble 150 comporte également un système d'évacuation 160 qui comporte un orifice de sortie 156 qui est arrangé à travers la peau extérieure 158 de l'aéronef 100, une canalisation principale 161 fluidiquement connectée à l'orifice de sortie 156, et, pour chaque boîtier 202, une canalisation d'évacuation 162a-c fluidiquement connectée entre la face de connexion 203 du boîtier 202 associé et la canalisation principale 161 et à travers cette dernière à l'orifice de sortie 156.

Ainsi lorsqu'un problème intervient au niveau d'un bloc batterie 152a-c, le gaz sous pression s'écoule dans la canalisation d'évacuation 162a-c correspondante, jusqu'à la canalisation principale 161 et à l'orifice de sortie 156.

Selon le problème qui survient au niveau d'un bloc batterie 152a-c, une surpression peut être générée. Cette surpression peut se propager alors à travers les canalisations d'évacuation 162a-c et la canalisation principale 161.

Afin d'éviter la propagation d'une telle surpression, le système d'évacuation 160 comporte au niveau du raccordement entre chaque face de connexion 203 et la canalisation d'évacuation 162a-c associée, un boîtier d'amortissement 170a-c d'un premier type et au niveau du raccordement entre la canalisation principale 161 et l'orifice de sortie 156, un boîtier d'amortissement 170d d'un deuxième type.

Chaque boîtier d'amortissement 170a-d est prévu pour limiter l'amplitude de la surpression qui se propage du boîtier 202 vers l'orifice de sortie 156 dans le système d'évacuation 160 et il n'est plus nécessaire de prévoir des canalisations rigides et lourdes, et des canalisations plus légères peuvent alors être utilisées.

Le système d'évacuation 160 selon l'invention ne nécessite plus l'utilisation de raccord en T avec système anti-retour ce qui permet d'avoir une installation plus simple avec moins de maintenance. Il est également possible de mettre en place plus de deux blocs batterie 152a-c. Chaque boîtier d'amortissement 170a-c du premier type qui est au niveau d'un boîtier 202 permet d'atténuer une surpression qui sortirait dudit boîtier 202 à travers la face de connexion 203 vers l'orifice de sortie 156 et assure la fonction de clapet anti-retour dans le cas où une surpression proviendrait d'un autre boîtier 202.

Si une batterie se détériore en générant une surpression, le boîtier d'amortissement 170a du premier type correspondant amortit la surpression qui se propage dans la canalisation d'évacuation 162a correspondante et la canalisation principale 161, et si la surpression qui atteint la canalisation principale 161 est encore relativement puissante, le boîtier d'amortissement 170d du deuxième type qui est au niveau de l'orifice de sortie 156 amortit la surpression avant sa sortie vers l'extérieur.

Dans le deuxième mode de réalisation de l'invention, chaque boîtier 202 est logé dans une enceinte 154a-c délimitée par une paroi 205 et assurant le confinement du bloc batterie 152a-c enfermé dans ledit boîtier 202 et du boîtier d'amortissement 170a-c du premier type associé audit boîtier 202.

Chaque canalisation d'évacuation 162a-c est fluidiquement connectée à la face de connexion 203 du boîtier 202 correspondant à travers la paroi 205 de l'enceinte 154a-c associée.

Les Figs. 4 à 6 montrent différents modes de réalisation d'un boîtier d'amortissement 370, 470, 570. Chaque Fig. 4 à 6 montre un boîtier d'amortissement 370, 470, 570 du premier type qui est au niveau du raccordement entre une face de connexion 303, 403, 503 du boîtier 302, 402, 502 et la canalisation d'évacuation 312, 412, 512 associée. Bien sûr chaque boîtier d'amortissement 370, 470, 570 du premier type peut prendre l'une ou l'autre des différentes formes proposées.

Dans chacun des modes de réalisation, le boîtier 302, 402, 502 est fixé à la structure de l'aéronef 100. Lorsque le boîtier 302, 402, 502 est dans une enceinte 354, 454, 554, la paroi 372, 472, 572 de l'enceinte 354, 454, 554 est également fixée à la structure de l'aéronef 100 par des premiers moyens de fixation 103.

Le boîtier 302, 402, 502 peut être alors fixé à la paroi 372, 472, 572 de l'enceinte 354, 454, 554, ou directement à la structure de l'aéronef 100 par des moyens de fixation 101 que ledit boîtier 302, 402, 502 soit logé dans une enceinte 354, 454, 554 ou non.

Dans le mode de réalisation de la Fig. 4, le boîtier d'amortissement 370 du premier type comporte un disque de rupture 304 constituant la face de connexion 303 du boîtier 302 dans lequel est enfermé le bloc batterie 352. Le disque de rupture 304 est une paroi qui est calibrée pour rompre lorsque la pression qui s'exerce sur elle atteint un seuil prévu et dont la résistance mécanique est inférieure à la résistance mécanique des autres faces du boîtier 302 pour assurer que le disque de rupture 304 va bien rompre avant lesdites autres faces.

Le boîtier d'amortissement 370 du premier type comporte également un soufflet 306 dont une première extrémité est fixée de manière étanche au boîtier 302 autour du disque de rupture 304 et dont une deuxième extrémité est fixée de manière étanche à l'entrée de la canalisation d'évacuation 312. Ainsi, en cas de génération d'une surpression dans le bloc batterie 352, la surpression va briser le disque de rupture 304 ce qui va atténuer son amplitude et le soufflet 306 va se gonfler sous l'effet de la surpression ce qui va également atténuer son amplitude. Dans le deuxième mode de réalisation, pour confiner la surpression en cas de rupture du soufflet 306 par exemple, la paroi 372 de l'enceinte 354 renferme le bloc batterie 352, son boîtier 302, l'entrée de la canalisation d'évacuation 312 et le soufflet 306.

Dans le mode de réalisation de l'invention présenté à la Fig. 4, pour assurer sa fixation, le soufflet 306 présente au niveau de chaque extrémité une jupe 308 qui est fixée ici par des écrous 310 autour de la jupe 308, respectivement au boîtier 302 ou à la canalisation d'évacuation 312. Pour compléter l'étanchéité, un joint torique 312 est serré entre la jupe 308 et le boîtier 302 et un joint torique 314 est serré entre la jupe 308 et la canalisation d'évacuation 312.

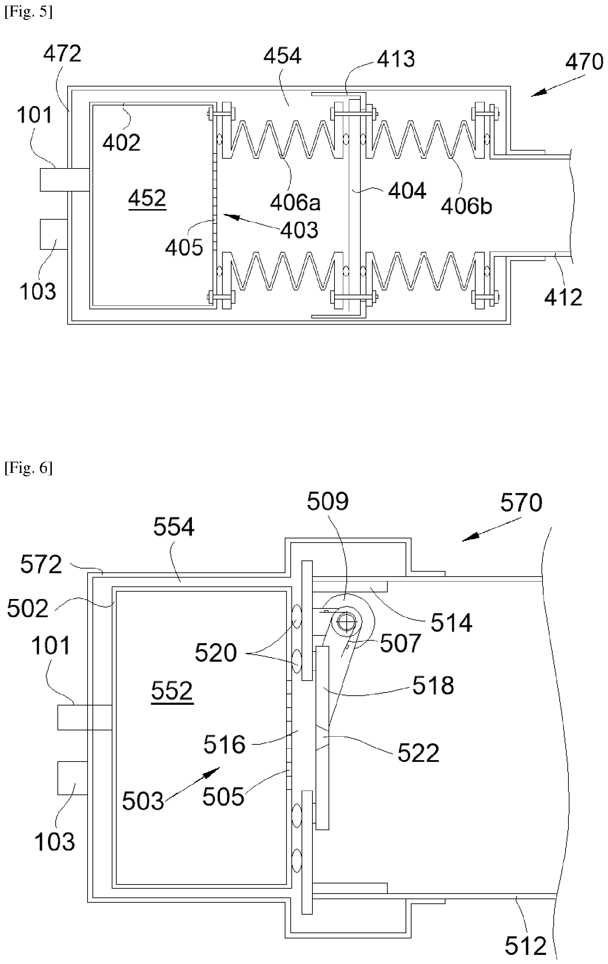

Dans le mode de réalisation de la Fig. 5, le boîtier d'amortissement 470 du premier type comporte une zone fragilisée 405 réalisée dans la face de connexion 403 du boîtier 402 dans lequel est enfermé le bloc batterie 452. La zone fragilisée 405 est par exemple un orifice ou une zone prédécoupée ou une zone de moindre épaisseur que les autres faces du boîtier 402. D'une manière générale, la zone fragilisée 405 présente une résistance mécanique inférieure à la résistance mécanique des autres faces du boîtier 402.

Le boîtier d'amortissement 470 du premier type comporte également un disque de rupture 404 qui est fixé entre la face de connexion 403 du boîtier 402 et l'entrée de la canalisation d'évacuation 412. Pour ce faire, le boîtier d'amortissement 470 comporte un châssis 413 contre lequel le disque de rupture 404 est maintenu. Le châssis 413 est fixé à la structure de l'aéronef 100 ou à la paroi 472 de l'enceinte 454 lorsqu'elle est présente.

Le boîtier d'amortissement 470 du premier type comporte également un premier soufflet 406a dont une première extrémité est fixée de manière étanche au boîtier 402 autour de la zone fragilisée 405 et dont une deuxième extrémité est fixée de manière étanche contre une première face du disque de rupture 404, et un deuxième soufflet 406b dont une première extrémité est fixée de manière étanche contre une deuxième face du disque de rupture 404 et dont une deuxième extrémité est fixée de manière étanche à l'entrée de la canalisation d'évacuation 412. Les deux faces du disque de rupture 404 sont opposées l'une à l'autre. Ainsi, en cas de génération d'une surpression dans le bloc batterie 452, la surpression va briser le disque de rupture 404 ce qui va atténuer son amplitude et les soufflets 406a-b vont se gonfler sous l'effet de la surpression ce qui va également atténuer son amplitude.

Dans le deuxième mode de réalisation, pour confiner la surpression en cas de rupture d'un soufflet 406a-b, la paroi 472 de l'enceinte 454 renferme le bloc batterie 452, son boîtier 402, l'entrée de la canalisation d'évacuation 412, le disque de rupture 404 et les soufflets 406a-b. Dans le mode de réalisation de l'invention présenté à la Fig. 5, pour assurer leur fixation, chaque soufflet 406 présente au niveau de chaque extrémité une jupe qui est fixée ici par des écrous autour de la jupe, au disque de rupture 404 et au boîtier 402 ou à la canalisation d'évacuation 412. Pour compléter l'étanchéité, un joint torique est serré entre chaque jupe et la contrepartie correspondante.

Dans le mode de réalisation de la Fig. 6, le boîtier d'amortissement 570 du premier type comporte une zone fragilisée 505 réalisée dans la face de connexion 503 du boîtier 502 dans lequel est enfermé le bloc batterie 552. La zone fragilisée 505 est par exemple un orifice ou une zone prédécoupée ou une zone de moindre épaisseur que les autres faces du boîtier 502. D'une manière générale, la zone fragilisée 505 présente une résistance mécanique inférieure à la résistance mécanique des autres faces du boîtier 502.

Le boîtier d'amortissement 570 du premier type comporte également un châssis 514 qui est fixé de manière étanche entre la canalisation d'évacuation 512 et la face de connexion 503 du boîtier 502. Dans le mode de réalisation de l'invention, présenté à la Fig. 6, le châssis 514 est fixé et emmanché dans l'entrée de la canalisation d'évacuation 512.

L'étanchéité de la fixation est assurée ici par deux joints toriques 520 fixés entre le châssis 514 et le boîtier 502.

Le châssis 514 présente une fenêtre 516 qui le traverse et un volet 518 qui est monté sur le châssis 514 et qui est mobile alternativement entre une position fermée dans laquelle le volet 518 obture la fenêtre 516 et une position ouverte dans laquelle le volet 518 n'obture pas la fenêtre 516. La fenêtre 516 est en regard de la zone fragilisée 505.

Pour éviter une ouverture non souhaitée du volet 518, le boîtier d'amortissement 570 comporte également un moyen de rappel 507, comme par exemple un ressort, qui contraint le volet 518 en position fermée. La force qu'exerce le moyen de rappel 507 doit être suffisant pour maintenir le volet 518 en position fermée mais ne doit pas faire obstacle à l'ouverture du volet 518 lorsque la pression qui s'exerce sur le volet 518 dépasse un seuil.

Dans le mode de réalisation de l'invention présenté à la Fig. 6, le volet 518 est monté mobile en rotation, et s'ouvre vers la canalisation d'évacuation 512 et le moyen de rappel 507 est par exemple un ressort de torsion.

Ainsi, en cas de génération d'une surpression dans le bloc batterie 552, la surpression va pousser le volet 518 vers la position ouverte afin de libérer la fenêtre 516 ce qui va atténuer l'amplitude de la surpression.

Dans le deuxième mode de réalisation, pour confiner la surpression en cas de fuite au niveau des joints toriques 520, la paroi 572 de l'enceinte 554 renferme le bloc batterie 552, son boîtier 502, l'entrée de la canalisation d'évacuation 512, le châssis 514 et le volet 518.

Pour permettre un équilibrage de la pression de part et d'autre du volet 518, celui-ci est percé d'un trou 522 dont le diamètre est par exemple de l'ordre de 1 à 2 mm.

Les différents modes de réalisation décrits à partir des Figs. 4 à 6 sont associés à un boîtier d'amortissement du premier type. Pour un boîtier d'amortissement du deuxième type, la sortie de la canalisation d'évacuation 312, 412, 512 prend la place du boîtier 302, 402, 502 et l'orifice de sortie 156 prend la place de la canalisation d'évacuation 312, 412, 512. Le disque de rupture ou le volet se trouve alors à la sortie de la canalisation d'évacuation 312, 412, 512 et le soufflet, lorsqu'il est présent, se trouve entre la sortie de la canalisation d'évacuation 312, 412, 512 et l'orifice de sortie 156.

Les modes de réalisation des Figs. 4 à 6 sont des boîtiers d'amortissement à fonctionnement passif, mais il est possible d'utiliser des boîtiers d'amortissement à fonctionnement actif. Dans le mode de la Fig. 6, le moyen de rappel 507 est remplacé par un actionneur 509, par exemple du type moteur ou vérin, qui est agencé pour déplacer le volet 518 de la position ouverte à la position fermée et inversement.

L'ensemble 150 comporte également une unité de contrôle 178 qui comporte par exemple, reliés par un bus de communication, un processeur ou CPU (« Central Processing Unit » en anglais), une mémoire vive RAM (« Random Access Memory » en anglais), une mémoire morte ROM (« Read Only Memory » en anglais), une unité de stockage telle qu'un disque dur ou un lecteur de support de stockage, tel qu'un lecteur de cartes SD (« Secure Digital » en anglais), au moins une interface de communication, permettant par exemple à l'unité de contrôle 178 de communiquer, entre autres, avec chaque actionneur 509.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessous.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

Chaque enceinte 154a-c est équipée d'un système de capteur 176 avec un capteur de pression et un capteur de température qui sont prévus pour mesurer la pression et la température qui règnent dans ladite enceinte 154a-c et l'unité de contrôle 178 est arrangée pour recevoir les mesures transmises par les capteurs de pression et les capteurs de température.

À partir de ces informations, l'unité de contrôle 178 détermine si un problème est en train de survenir au niveau d'une des enceintes 154a-c ou non. Ainsi, un problème survient dans une enceinte 154a-c si la température et/ou la pression de l'enceinte 154a-c dépassent des seuils enregistrés, et aucun problème ne survient dans l'enceinte 154a-c si ni la température ni la pression dans ladite enceinte 154a-c ne dépasse les seuils enregistrés.

Selon un mode de réalisation particulier, chaque enceinte 154a-c est équipée d'un tel boîtier d'amortissement du premier type. En fonctionnement normal, c'est-à-dire lorsqu'aucun problème n'est détecté, l'unité de contrôle 178 commande l'actionneur 509 associé à chaque enceinte 154a-c pour qu'il positionne le volet 518 associé en position ouverte, et lorsqu'un problème est détecté au niveau d'une enceinte 154a-c, l'unité de contrôle 178 commande chaque actionneur 509 correspondant à une enceinte 154a-c où aucun problème n'est détecté pour qu'il positionne le volet 518 correspondant en position fermée. Ainsi, lorsqu'un problème est détecté au niveau d'une enceinte 154a-c, les volets 518 correspondant aux autres enceintes 154a-c sont fermés pour éviter la propagation aux enceintes 154a-c saines et pour atténuer l'amplitude de la surpression.

Selon un autre mode de réalisation particulier, chaque enceinte 154a-c est équipée d'un tel boîtier d'amortissement du premier type. En fonctionnement normal, l'unité de contrôle 178 commande l'actionneur 509 de chaque enceinte 154a-c pour qu'il positionne le volet 518 associé en position fermée, et lorsqu'un problème est détecté au niveau d'une enceinte 154a-c, l'unité de contrôle 178 commande l'actionneur 509 correspondant à ladite enceinte 154a-c pour qu'il positionne le volet 518 correspondant en position ouverte. Ainsi, lorsqu'un problème est détecté au niveau d'une enceinte 154a-c, le volet 518 correspondant à ladite enceinte 154a-c est ouvert pour atténuer l'amplitude de la surpression.

Selon un mode de réalisation particulier, l'ensemble 150 comporte un réservoir 180 contenant un gaz inerte sous pression et un réseau de canalisations de déversement 182 comportant une extrémité fluidiquement connectée au réservoir 180 à travers une électrovanne de départ 179, pour chaque enceinte 154a-c, une extrémité fluidiquement connectée à ladite enceinte 154a-c, et une extrémité fluidiquement connectée à la canalisation principale 161.

L'ensemble 150 comporte également pour chaque enceinte 154a-c et la canalisation principale 161, une électrovanne d'arrivée 181 qui est montée au niveau de l'extrémité fluidiquement connectée à ladite enceinte 154a-c, respectivement à la canalisation principale 161.

Ainsi, lorsque l'électrovanne de départ 179 est ouverte, le gaz inerte se répand à travers le réseau de canalisations de déversement 182 et selon quelle électrovanne d'arrivée 181 est ouverte le gaz inerte se répand dans l'enceinte 154a-c, respectivement la canalisation principale 161 considérée et les canalisations d'évacuation 162a-c lorsque le gaz inerte se répand dans la canalisation principale 161.

Ce mode de réalisation peut être mis en œuvre avec chacun des modes de réalisation actif ou passif décrits ci-dessus.

L'ensemble 150 comporte également une unité secondaire de contrôle qui peut être la même que celle décrite ci-dessus ou une autre du même type en communication avec elle. Dans le mode de réalisation de l'invention présenté sur la Fig. 3, l'unité secondaire de contrôle est considérée comme étant l'unité de contrôle 178.

Comme pour les modes de réalisation actifs, chaque enceinte 154a-c comporte un système de capteurs 176 avec un capteur de température qui est prévu pour mesurer la température qui règne dans ladite enceinte 154a-c et l'unité secondaire de contrôle 178 est arrangée pour recevoir les mesures transmises par chaque capteur de température et pour commander l'électrovanne de départ 179 alternativement en ouverture ou en fermeture et chaque électrovanne d'arrivée 181 en ouverture ou en fermeture. Comme précédemment, l'unité secondaire de contrôle 178 détermine si un problème est en train de survenir au niveau d'une des enceintes 154a-c ou non. Ainsi, un problème survient dans une enceinte 154a-c si la température dépasse un seuil enregistré et aucun problème ne survient si la température ne dépasse pas le seuil enregistré.

En fonctionnement normal, l'unité secondaire de contrôle 178 commande l'électrovanne de départ 179 en fermeture évitant l'écoulement du gaz inerte dans les enceintes 154a-c et la canalisation principale 161.

Lorsqu'un problème est détecté dans une enceinte 154a-c, l'unité secondaire de contrôle 178 commande l'électrovanne de départ 179 en ouverture ce qui permet l'écoulement du gaz inerte dans le réseau de canalisations de déversement 182 et l'unité secondaire de contrôle 178 commande en ouverture l'électrovanne d'arrivée 181 correspondant à chaque enceinte 154a-c ayant un problème et en fermeture les électrovannes d'arrivée 181 des autres enceintes 154a-c et de la canalisation principale 161.

Cet apport de gaz inerte permet d'atténuer la surchauffe et d'éviter les flammes qui se forment au niveau de l'enceinte 154a-c où le problème a été repéré.

En outre, chaque électrovanne d'arrivée 181 est préférentiellement anti-retour pour éviter que le gaz inerte ou en surpression se répand de l'enceinte 154a-c vers le réservoir 180.

## Revendications

1. Ensemble (150) pour un véhicule (100), ledit ensemble (150) comportant :
- au moins deux blocs batterie (152a-c), chacun étant constitué d'au moins une batterie,
- pour chaque bloc batterie (152a-c), un boîtier (202, 302, 402, 502) dans lequel ledit bloc batterie (152a-c) est enfermé et qui présente une face de connexion (203, 303, 403, 503),
- un orifice de sortie (156) arrangé à travers une peau extérieure (158) du véhicule (100),
- une canalisation principale (161) fluidiquement connectée à l'orifice de sortie (156),
- pour chaque boîtier (202, 302, 402, 502), une canalisation d'évacuation (162a-c, 312, 412, 512) fluidiquement connectée entre la face de connexion (203, 303, 403,503) dudit boîtier (202, 302, 402, 502) et la canalisation principale (161), et
- au niveau du raccordement entre chaque face de connexion (203, 303, 403, 503) et la canalisation d'évacuation (162a-c, 312, 412, 512) associée, un boîtier d'amortissement (170a-c, 370, 470, 570) d'un premier type et au niveau du raccordement entre la canalisation principale (161) et l'orifice de sortie (156), un boîtier d'amortissement (170d) d'un deuxième type, où chaque boîtier d'amortissement (170a-d, 370, 470, 570) est configuré pour limiter l'amplitude d'une surpression qui se propage dudit boîtier (202, 302, 402, 502) vers l'orifice de sortie (156), où l'ensemble (150) comporte, associé à chaque boîtier (202, 302, 402, 502), une enceinte (154a-c, 354, 454, 554) délimitée par une paroi (205, 372, 472, 572) et dans laquelle ledit boîtier (202, 302, 402, 502) et le boîtier d'amortissement (170a-c, 370, 470, 570) du premier type associé audit boîtier (202, 302, 402, 502) sont logés, et où chaque canalisation d'évacuation (162a-c, 312, 412, 512) est fluidiquement connectée à la face de connexion (203, 303, 403, 503) associée à travers la paroi (205) de l'enceinte (154a-c) correspondante, où chaque boîtier d'amortissement (570) du premier type comporte une zone fragilisée (505) réalisée dans la face de connexion (503) du boîtier (502), un châssis (514) fixé de manière étanche entre la canalisation d'évacuation (512) et la face de connexion (503) du boîtier (502) et présentant une fenêtre (516) qui le traverse et est en regard de la zone fragilisée (505), un volet (518) monté sur le châssis (514) et mobile alternativement entre une position fermée dans laquelle le volet (518) obture la fenêtre (516) et une position ouverte dans laquelle le volet (518) n'obture pas la fenêtre (516), un actionneur (509) agencé pour déplacer le volet (518) de la position ouverte à la position fermée et inversement, où chaque enceinte (154a-c) est équipée d'un capteur de pression et d'un capteur de température prévus pour mesurer la pression et la température qui règnent dans ladite enceinte (154a-c) et où l'ensemble (150) comporte une unité de contrôle (178) arrangée pour recevoir les mesures transmises par les capteurs de pression et les capteurs de température et commander chaque actionneur (509).

2. Ensemble (150) selon la revendication 1, **caractérisé en ce que** chaque enceinte (154a-c) comporte un capteur de température prévu pour mesurer la température qui règne dans ladite enceinte (154a-c), **en ce que** l'ensemble (150) comporte un réservoir (180) contenant un gaz inerte sous pression, un réseau de canalisations de déversement (182) comportant une extrémité fluidiquement connectée au réservoir (180) à travers une électrovanne de départ (179), pour chaque enceinte (154a-c), une extrémité fluidiquement connectée à ladite enceinte (154a-c) à travers une électrovanne d'arrivée (181), et une extrémité fluidiquement connectée à la canalisation principale (161) à travers une électrovanne d'arrivée (181), et une unité secondaire de contrôle (178) arrangée pour recevoir les mesures transmises par chaque capteur de température et commander chaque électrovanne (179, 181) en fermeture ou en ouverture.

3. Aéronef (100) comportant une peau extérieure (158) et au moins un ensemble selon l'une des revendications précédentes.
